(19) **Europäisches Patentamt**

**European Patent Office**

**Office européen des brevets**

(11) Veröffentlichungsnummer: **0 498 902 B1**

(12) **EUROPÄISCHE PATENTSCHRIFT**

(45) Veröffentlichungstag der Patentschrift: **30.11.94**

(51) Int. Cl.⁵: **G01C 19/72**

(21) Anmeldenummer: **91101872.9**

(22) Anmeldetag: **11.02.91**

(54) **Faseroptisches Sagnac-Interferometer mit digitaler Phasenmodulation zur Drehratenmessung.**

(43) Veröffentlichungstag der Anmeldung:
**19.08.92 Patentblatt 92/34**

(45) Bekanntmachung des Hinweises auf die
Patenterteilung:
**30.11.94 Patentblatt 94/48**

(84) Benannte Vertragsstaaten:
**CH DE ES FR GB IT LI**

(56) Entgegenhaltungen:
**EP-A- 0 441 998**
**GB-A- 2 227 833**

(73) Patentinhaber: **LITEF GmbH**
**Lörracher Strasse 18**
**D-79115 Freiburg (DE)**

(72) Erfinder: **Spahlinger, Günter, Dr.**
**Hagbergstr. 7**
**W-7000 Stuttgart 1 (DE)**
Erfinder: **Büschelberger, Hans-J., Dipl.-Phys.**
**Taradanumweg 95**
**W-7815 Kirchzarten (DE)**

(74) Vertreter: **TER MEER - MÜLLER - STEINMEI-
STER & PARTNER**
**Mauerkircherstrasse 45**
**D-81679 München (DE)**

## Beschreibung

Die Erfindung betrifft ein Modulationsverfahren für ein faseroptisches Sagnac-Interferometer zur Drehratenmessung, bei dem zwei aus einer Lichtquelle stammende, durch einen Polarisator polarisierte und durch Strahlteilung erzeugte Lichtstrahlen in entgegengesetzten Richtungen in eine Faserspule eingestrahlt und anschließend wiedervereinigt werden, bei dem das entstehende Interferenzbild nach Durchlauf durch den Polarisator eine Detektoreinrichtung beaufschlagt, deren Ausgangssignal der Lichtintensität des Interferenzbildes entspricht, bei dem die beiden Lichtstrahlen mittels eines in der Faserspule liegenden und von einem Modulationssignalgenerator (MG) angesteuerten Phasenmodulators moduliert werden und bei dem das verstärkte Photodetektorausgangssignal einem Synchrondemodulator zugeführt wird.

Eine auf ein Sagnac-Interferometer einwirkende Drehbewegung ruft eine Phasenverschiebung zwischen den beiden entgegengesetzt umlaufenden Lichtstrahlen hervor, so daß am Ort der Überlagerung beider Strahlen ein von der Drehbewegung abhängiges Interferenzbild entsteht.

Die Transferfunktion des Interferometers wird beschrieben durch

$$I = I_0 \cdot \tfrac{1}{2} \cos (\Delta\phi)$$

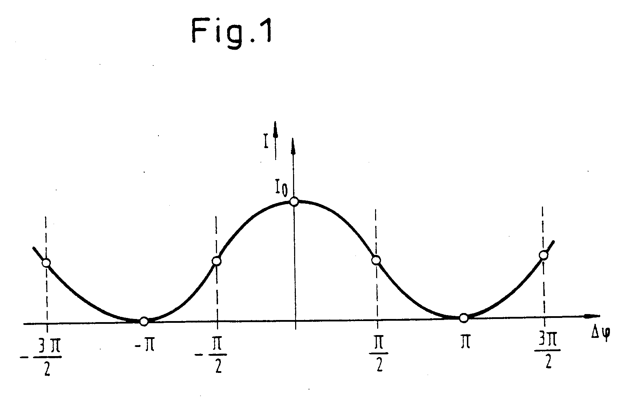

$I_0$ ist dabei die Lichtintensität bei fehlender Phasenverschiebung (vgl. Fig. 1). Die Phasenverschiebung (Sagnac-Phase) hängt mit der Drehgeschwindigkeit $\Omega$ folgendermaßen zusammen:

$$\Delta\varphi = \frac{2\pi\ LD}{\lambda c}\ \Omega$$

L = Lichtweglänge
D = Durchmesser eines kreisförmigen Lichtwegs
λ = Wellenlänge des Lichts
c = Lichtgeschwindigkeit

Die oben beschriebene Form einer Transferfunktion hat zwei erhebliche Nachteile für eine (Dreh-)Sensoranwendung:

- Sie ist im Maximum der Cosinus-Kurve unempfindlich gegenüber kleinen Eingangswerten;
- aus dem Intensitätssignal ist das Vorzeichen der Phasenverschiebung nicht zu ersehen.

Um diese Nachteile zu überwinden, ist es üblich, mittels eines Phasenmodulationsverfahrens den Arbeitspunkt auf der Kennlinie in den Bereich größerer Empfindlichkeit zu verschieben. Zwei häufig verwendete Modulationsarten sind

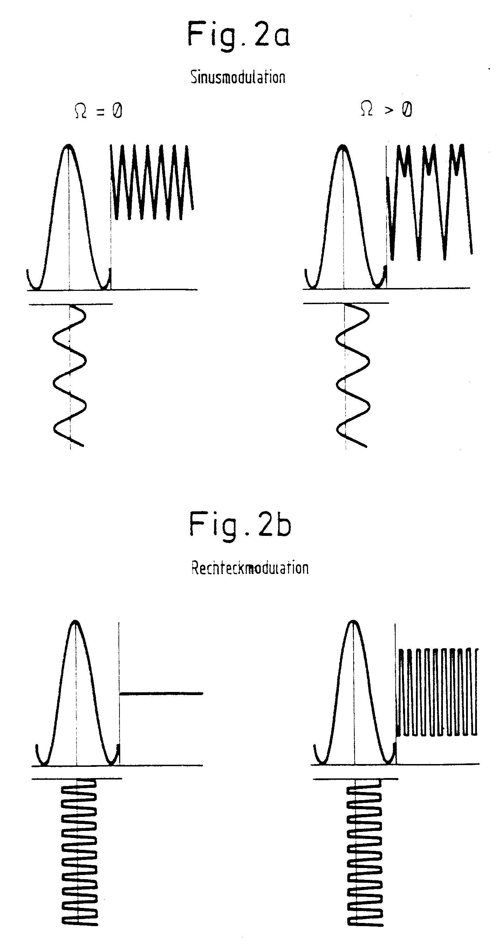

- die Sinusmodulation (vgl. Fig. 2a) und
- die Rechteckmodulation (vgl. Fig. 2b).

Die letztere Modulationsart ist in der Druckschrift GB-A-2 227 833 beschrieben, wobei dort durch Einsatz eines weiteren Demodulators, der durch einen niederfrequenten Schaltsignalgenerator angesteuert wird, Maßnahmen getroffen sind, um DC-Offset-Spannungen des Rechteckmodulators zu kompensieren.

Die Beaufschlagung des optischen Phasenmodulators mit einem solchen Signal liefert eine empfindliche Transferfunktion und die Möglichkeit, das Vorzeichen zu erkennen.

Die Synchron-Demodulation der in Fig. 2 dargestellten Signale liefert die Phasenverschiebung und damit die Drehgeschwindigkeit.

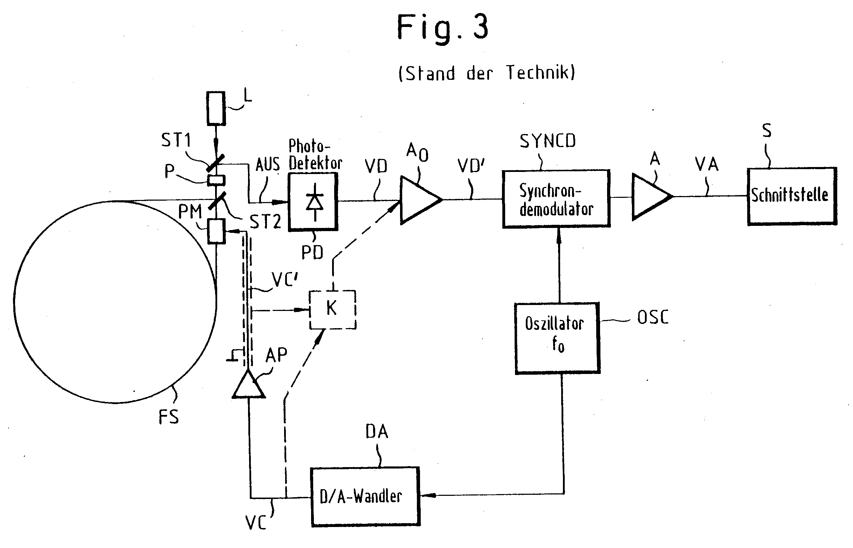

Die schematische und vereinfachte Darstellung der Fig. 3 eines dem genannten Stand der Technik entsprechenden Sagnac-Interferometers (Drehratensensors) mit geschlossener Faserschleife zeigt eine Lichtquelle L; beispielsweise einen Laser, dessen parallele Lichtstrahlen durch einen Polarisator P polarisiert und über einen Strahlteiler ST2 in zwei Lichtstrahlen aufgeteilt sowie in entgegengesetzter Richtung in eine Interferometer-Faserspule FS eingestrahlt werden. Die Faserspule FS wird vorzugsweise aus einer optischen Monomodefaser bestehen. Der Strahlteiler ST2 wirkt gleichzeitig als Mischer zur Rekombination der beiden Lichtstrahlen nach Durchlaufen der Faserspule FS. Das Interferenzsignal der beiden überlagerten Lichtstrahlen gelangt nach Durchlaufen des Polarisators P über einen zweiten Strahlteiler ST1 und dessen Ausgangszweig AUS auf einen Photodetektor PD, der die Intensität des Interferenzbildes abtastet. Wird mit $\Delta\phi_0$ die Phasendifferenz zwischen den beiden sich in entgegengesetzten Richtungen in der geschlossenen Faserspule FS ausbreitenden Lichtstrahlen bezeichnet, so gilt, solange keine nichtreziproken Störungen vorliegen: $\Delta\phi_0 = 0$.

Das elektrische Signal VD des Photodetektors PD wird über einen Impedanzwandler und Verstärker $A_0$ angehoben, dessen Ausgangssignal VD' einen Synchrondemodulator SYNCD speist, der auf die Modulationsfrequenz $f_0$ synchronisiert ist. Das demodulierte Ausgangssignal gelangt über einen Verstärker A als Signal VA auf eine Ausgangsschnittstelle S, deren Ausgangssignal proportional ist zur Drehrate und die Vorzeicheninformation hinsichtlich der Drehrichtung enthält.

Dieses soweit anhand der Fig. 3 kurz beschriebene Funktionsprinzip des Ausleseverfahrens für faseroptische Drehratensensoren führt in der Praxis des Betriebs von solchen inertialen Drehratenmeßeinrichtungen zu erheblichen Schwierigkeiten aus folgenden Gründen:

Der Spannungspegel des Modulationssignals VC bzw. VC' für den Phasenmodulator PM liegt in der Größenordnung von mehreren Volt. Der Spannungspegel des Detektorsignals VD jedoch liegt in der Größenordnung von einigen Nanovolt entsprechend einer Drehgeschwindigkeit der Apparatur von 1°/h. Unerwünschte Einstreueffekte von VC und VC' auf VD führen zu Verfälschungen des Meßsignals. Der Ausgang der Signalverarbeitung zeigt scheinbare Drehraten an. Der Nullpunkt bzw. der Arbeitspunkt der Meßanordnung wird durch inhärente Störungen verändert. In Fig. 3 sind solche Einstreueffekte durch gestrichelte Linien und den Koppelfaktor K angedeutet.

Es wäre nun naheliegend, die elektromagnetischen Einstreuungen (Störungen mit einem Koppelfaktor K; vgl. Fig. 3) durch Abschirm-Maßnahmen - in Fig. 3 angedeutet durch Abschirmung der Verbindungsleitung vom Treiberverstärker AP zum Phasenmodulator PM - und den Einbau von Filtern in Signal- und Spannungszuführleitungen beseitigen oder zumindest vermindern zu wollen. Bei dem bekannten Interferometeraufbau nach Fig. 3 ergibt sich jedoch eine spezielle Problematik: Das Signal VC bzw. VC' beinhaltet die Modulationsfrequenz $f_0$, die in einem Oszillator OSC erzeugt wird. Das Photodetektorsignal VD beinhaltet aber die Drehrateninformation mit derselben Frequenz und Phasenlage. Dieses Signal wird im Synchrondemodulator SYNCD detektiert. Die Schaltungsgruppen, die die Modulationsgröße der Frequenz $f_0$ erzeugen, und die Schaltungsteile, die das drehratenempfindliche Signal gleicher Frequenz führen, stehen in engem räumlichem Zusammenhang und müssen in aller Regel aus einer gemeinsamen Stromversorgungseinrichtung gespeist werden. Damit ist die Gefahr der Einstreuung von elektromagnetischer Energie der Frequenz $f_0$ in den empfindlichen Signalpfad (Signal VD) offenkundig. Sperrfilter für $f_0$ in den Signalleitungen sind nicht möglich, da die gewünschte Signalinformation bei eben dieser Frequenz vorliegt. Unerwünschte Einstreuungen können also z. B. nur durch Abschirmung des Verstärkers $A_0$ und des Synchrondemodulators SYNCD gegen den Rest der Schaltung sowie durch Filterung ihrer Stromzuführung in einem gewissen Umfang vermindert werden.

Die oben genannten Pegelverhältnisse lassen jedoch erkennen, daß trotz aller möglichen Abschirmmaßnahmen eine Kopplung zwischen den Signalen VC, VC' und VD unvermeidlich ist.

Der Erfindung liegt die Aufgabe zugrunde, die Verfälschung des Meßsignals eines faseroptischen Drehratensensors zu vermeiden.

Als Grundlage der Erfindung wurde erkannt, daß das Auftreten von Bias-Fehlern, die durch Einkopplung von Störsignalen in den Demodulatoreingang entstehen, durch die Verwendung eines Demodulationssignals unterdrückt werden kann, das statistisch unabhängig ist von allen als Ursache von Störsignalen in Betracht kommenden Signalquellen.

Bei dem eingangs gemäß dem Oberbegriff des Patentanspruchs definierten Modulationsverfahren besteht die erfindungsgemäße technische Lehre darin, daß

- für das den Phasenmodulator beaufschlagende Modulationssignal ein Spannungssignal verwendet wird, welches aus der Summe von zwei Anteilen zusammengesetzt ist, von denen der erste Anteil einen Spannungsverlauf hat, der aus wechselweise aufeinanderfolgenden Beträgen besteht, welche im Phasenmodulator eine Phasenverschiebung von Null und $\pi/2$ hervorrufen, während der zweite Anteil aus weitgehend korrelationsfrei aufeinanderfolgenden Spannungsbeträgen besteht, welche im Phasenmodulator die Phasenverschiebungen von Null und $\pi$ hervorrufen,
- der Sychnrondemodulator mit dem Ausgangssignal eines Laufzeitausgleichselements angesteuert wird, das eingangsseitig durch ein Signal aus dem Modulationssignalgenerator beaufschlagt wird, das aus vier Faktoren besteht, von denen
  -- der erste Faktor konstant den Wert - 1 hat,
  -- der zweite Faktor -1 ist, wenn der zweite Anteil den Wert Null hat, jedoch + 1 ist, wenn der zweite Anteil den Wert $\pi$ hat,
  -- der dritte Faktor -1 ist, wenn der zweite Anteil aus dem letzten vorhergehenden Modulatoinstakt den Wert Null hat, jedoch + 1 ist, wenn der zweite Anteil aus dem letzten vorhergehenden Modulationstakt den Wert $\pi$ hatte, und
  -- der vierte Faktor dann -1 ist, wenn der erste Anteil den Wert Null hat,jedoch + 1 ist, wenn der erste Anteil den Wert $\pi/2$ hat, und daß

-- das Produkt der vier Faktoren um einen Laufzeitausgleich korrigiert ist, der der Laufzeit des Lichts jedes der Lichtstrahlen durch die Faserspule sowie der Prozeßzeit für die Summation zur Gewinnung des zweiten Signalanteils, zur Zusammensetzung des ersten und zweiten Signalanteils zum Ansteuersignal für den Phasenmodulator und einer Digital/Analog-Wandlung des Ansteuersignals entspricht.

Die Erfindung und vorteilhafte Einzelheiten werden nachfolgend unter Bezug auf die Zeichnung in beispielsweiser Ausführungsform näherverdeutlicht. Es zeigen:

Fig.1 den prinzipiellen Verlauf der bereits erläuterten Transferfunktion eines faseroptischen Drehratensensors;

Fig. 2 eine bereits erläuterte Sinusmodulation (Fig. 2a) bzw. Rechteckmodulation (Fig. 2b) der Transferfunktion gemäß Fig. 1 zur Verschiebung des Arbeitspunkts in den Bereich größter Empfindlichkeit auf der Kennlinie der Transferfunktion;

Fig. 3 den prinzipiellen, bekannten und bereits erläuterten Aufbau eines faseroptischen Drehratensensors in sogenannter Open-Loop-Konfiguration;

Fig. 4 die Prinzipanordnung der für die erfindungsgemäße Modulation und Demodulation wichtigen Baugruppen eines faseroptischen Sagnac-Interferometers oder Ringinterferometers;

Fig. 5 den prinzipiellen Aufbau eines Modulationssignalgenerators, der in der Anordnung nach Fig. 4 mit MG bezeichnet ist; und

Fig. 6 einen der Darstellung von Fig. 3 entsprechenden Aufbau eines faseroptischen Drehratensensors mit erfindungsgemäßen Merkmalen in Open-Loop-Konfiguration.

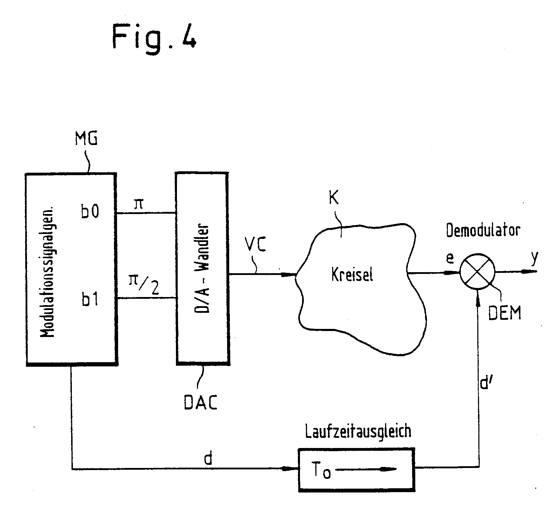

Fig. 4 verdeutlicht in prinzipieller Anordnung den für die Erfindung wesentlichen Teil einer faseroptischen Ringinterferometer-Anordnung, nämlich diejenigen Teile und Baugruppen, die für die Modulation und Demodulation wichtig sind. Ein Modulations-Signalgenerator MG erzeugt ein Modulationssignal, bestehend aus Bits b0 und b1 mit den Wertigkeiten $\pi$ bzw. $\pi/2$. Dieses Modulationssignal steuert nach Umwandlung über einen Digital/Analog-Wandler DAC als Signal PMS den Phasenmodulator PM (vgl. Fig. 3) und damit kurz gesagt den "Kreisel" K an. Das Bit b0 hat, wie erwähnt, die Wertigkeit $\pi$; alle höherwertigen Bits werden unterdrückt, so daß sich im D/A-Wandler DAC automatisch eine Modulo-$2\pi$-Operation ergibt. Das Ausgangssignal PMS des Digital/Analog-Wandlers DAC durchläuft die Interferometeranordnung oder den Kreiselpfad und gelangt als ein der empfangenen Lichtintensität I proportionales Signal e auf den Eingang eines Demodulators DEM. Der Modulationssignalgenerator MG liefert das erforderliche Demodulationssignal d, das nach einem Laufzeitausgleich $T_0$ an den Demodulator DEM gelangt. Der Laufzeitausgleich $T_0$ kompensiert die entstandenen Signallaufzeiten, also der Laufzeit $t_0$ des Lichts jedes der Lichtstrahlen durch die Faserspule FS sowie der Prozeßzeit für die Summation zur Gewinnung des zweiten Signalanteils gemäß der oben definierten erfindungsgemäßen Lehrer zur Zusammensetzung des ersten und zweiten Signalanteils zum Ansteuersignal PMS für den Phasenmodulator P sowie zur Digital/Analog-Wandlung im Digital/Analog-Wandler DAC. Der Laufzeitausgleich stellt sicher, daß das vom Modulationssignalgenerator MG gelieferte Demodulationssignal d als laufzeitkorrigiertes Demodulationssignal d' zum empfangenen Signal e "paßt".

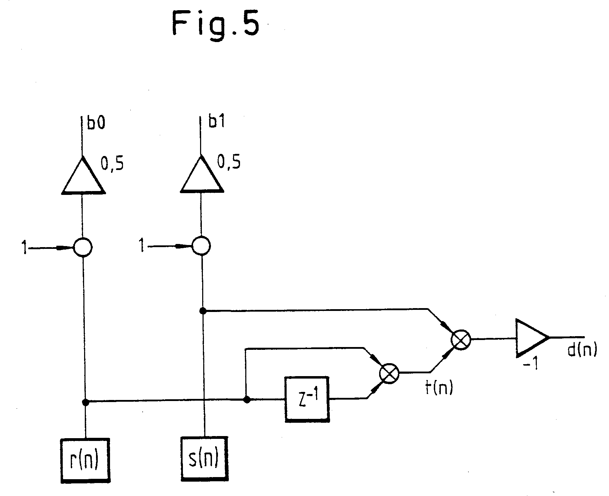

Um die erwähnte statistische Unabhängigkeit des Demodulationssignals d von allen anderen als Störquelle in Betracht kommenden Signalen zu garantieren, enthält der Modulations-Signalgenerator MG einen Zufallszahlengenerator, aus dem die Signale b0, b1 und d abgeleitet werden. Alternativ können auch fest abgespeicherte Signalmuster verwendet werden, die so zusammengesetzt werden, daß sich die geforderte statistische Unabhängigkeit ergibt. Für die folgende Beschreibung wird von der Lösung mit einem Zufallszahlengenerator, wie er in einem Prinzipblockschaltbild in Fig. 5 dargestellt ist, ausgegangen.

Wie sich aus der Interferometerkennlinie gemäß Fig. 1 ablesen läßt, liegen die anzusteuernden Umkehrpunkte der Steigung (größte Meßempfindlichkeit) bei ungeradzahligen Vielfachen von $\pi/2$. Sofern keine Drehrate vorliegt (Ruhezustand), besteht die Interferometerphase aus der Differenz der momentanen Modulationsphase p(n) und der zeitlich vorangegangenen Modulatorphase p(n-1). Damit diese Differenz stets ein ungeradzahliges Vielfaches von $\pi/2$ ist, muß p(n) abwechselnd ein geradzahliges bzw. ungeradzahliges Vielfaches von $\pi/2$ sein, d. h. das vom Modulations-Signalgenerator MG gelieferte Bit b1 mit der Wertigkeit $\pi/2$ muß ständig oszillieren.

b1(n) = {...0,1,0,1,0,1,0,1...}

Dieses Bit b1(n) wird erzeugt aus einem internen Signal s(n)

$s(n) = (-1)^n$
$b1(n) = (s(n) + 1)/2.$

Das vom Modulations-Signalgenerator MG gelieferte Bit b0 ist zunächst beliebig und kann als Freiheitsgrad für die Auswahl von Punkten mit positiver oder negativer Steigung der Interferometerkennlinie verwendet werden. Bei der hier vorgeschlagenen Lösung wird das Bit b0 aus der von einem Zufallszahlengenerator gelieferten Zahlenfolge R(n) abgeleitet, die gleich verteilt und statistisch unabhängig den Werten -1 oder 1 entspricht. Das Bit b0 ergibt sich hieraus durch

$$b0(n) \; = \; (r(n)+1)/2.$$

Das Vorzeichen des jeweils angesprungenen Punkts der Interferometerkennlinie ergibt sich somit aus

$$d(n) \; = \; -r(n) \cdot r(n\text{-}1) \cdot s(n).$$

Dieses so erzeugte Vorzeichensignal (vgl. Fig. 5) wird, nachdem es den Laufzeitausgleich $T_0$ passiert hat, zur Demodulation des empfangenen Signals verwendet.

Der aus den obigen Gleichungen folgende Aufbau des Modulations-Signalgenerators MG geht aus Fig. 5 hervor. Das Signal d(n) ist von s(n) statistisch unabhängig, obwohl s(n) zu seiner Erzeugung herangezogen wird. Bei der Bildung von d(n) wird aber s(n) durch die Multiplikation mit dem aus Zufallszahlen gebildeten Produkt r(n)·r(n-1) wieder vollständig verwürfelt. Das Demodulationssignal d(n) ist aber auch von r(n) statistisch unabhängig, weil t(n) = r(n)·r(n-1) von r(n) statisch unabhängig ist, d. h., daß die kreuzkorrelierte Crt(i) zwischen r(n) und t(n) identisch gleich Null ist. Dieses Ergebnis ist offensichtlich für i ungleich 0 und 1, da dann die um 0 oder 1 Positionen gegeneinander verschobenen Glieder der Folgen r(n) und t(n) keine gemeinsame Information mehr tragen. Für i = 0 oder 1 ergibt sich, daß die Kreuzkorrelierte von Crt(0) bzw. Crt(1) dem Mittelwert der Folge r(n) entspricht, welcher voraussetzunggemäß gleich Null ist.

Die Korrelation zwischen r(n) und t(n) läßt sich wie folgt darstellen:

Es gilt t(n) = r(n)·r(n-1)

$$Crt(i) \; = \; \lim_{N \to \infty} \frac{1}{2N} \sum_{n=-N}^{N} r(n) \cdot t(n+i)$$

$$Crt(0) \; = \; \lim_{N \to \infty} \frac{1}{2N} \sum_{n=-N}^{N} r(n) \cdot r(n) \cdot r(n\text{-}1) \; = \; \overline{r(n)} \; = \; 0$$

$$Crt(1) \; = \; \lim_{N \to \infty} \frac{1}{2N} \sum_{n=-N}^{N} r(n) \cdot r(n) \cdot r(n+1) \; = \; \overline{r(n)} \; = \; 0$$

Für i ≠ 0 und i ≠ 1:
    Crt(i) = 0 evident!
D.h.:
    Crt(i) = 0 für alle i.

Daraus ergibt sich, daß d(n) von allen beim Modulationsprozeß auftretenden Signalen im linearen Sinn statistisch unabhängig ist, so daß die eingangs aufgestellten Voraussetzungen erfüllt sind.

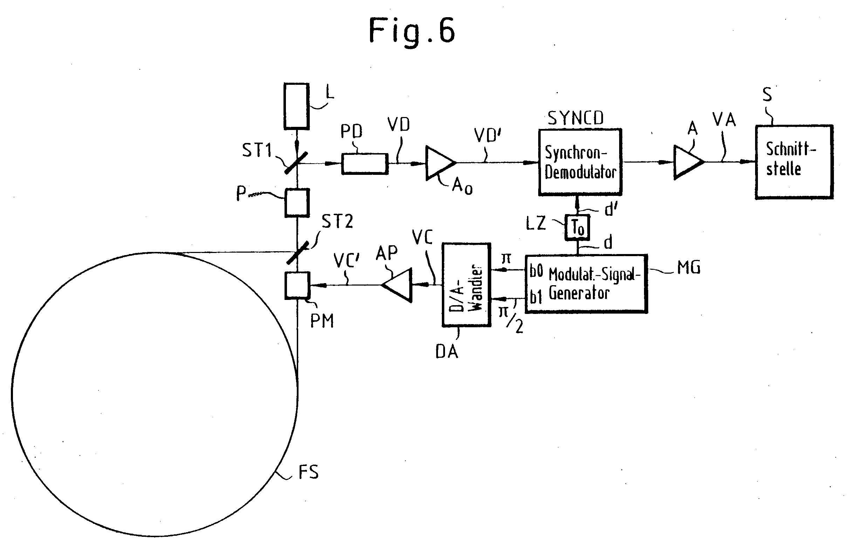

Die Fig. 6 zeigt einen der Fig. 3 entsprechenden Blockschaltbildaufbau eines Drehratensensors in Open-Loop-Konfiguration, jedoch bei erfindungsgemäßer statistischer Erzeugung des Modulationssignals für den Phasenmodulator PM. Die aus der Erläuterung der Fig. 3 bereits bekannten Baugruppen werden nicht erneut beschrieben.

Wie dargestellt, ist der Oszillator OSC gemäß Fig. 3 durch den anhand der Fig. 4 und 5 erläuterten Modulationssignalgenerator MG ersetzt. Das Demodulationssignal d durchläuft den Laufzeitausgleich LZ und beaufschlagt als laufzeitkorrigiertes Signal d' den Synchronsignaleingang des Synchrondemodulators SYNCD. Die Signale $b_0$ bzw. $b_1$, erzeugt entsprechend den Erläuterungen zu Fig. 5, gelangen auf den D/A-Wandler DA, wie oben anhand von Fig. 4 beschrieben.

Mit der Erfindung wird ein Modulationsverfahren für das Ansteuersignal eines Phasenmodulators eines faseroptischen Ringinterferometers zur Drehratenmessung bereitgestellt, welches die durch elektromagnetische Überkopplungen verursachten Biasfehler vermeide, wie sie beim Stand der Technik auftreten, ohne den notwendigen Aussteuerbereich für den Phasenmodulator zu vergrößern.

Die erfindungsgemäße Verwendung von statistisch unabhängigen Zufallsgeneratoren eignet sich insbesondere zur Vermeidung von Übersprecheffekten von benachbarten Elektronikbaugruppen, wenn auf engem Raum eine mehrachsige Drehraten-Sensoranordnung aufgebaut werden soll.

## Patentansprüche

1. Modulationsverfahren für ein faseroptisches Sagnac-Interferometer zur Drehratenmessung, bei dem
   - zwei aus einer Lichtquelle (L) stammende, durch einen Polarisator (P) polarisierte und durch Strahlteilung (ST2) erzeugte Lichtstrahlen in entgegengesetzten Richtungen in eine Faserspule (FS) eingestrahlt und anschließend wiedervereinigt werden,
   - das entstehende Interferenzbild nach Durchlauf durch den Polarisator (P) eine Detektoreinrichtung (PD) beaufschlagt, deren Ausgangssignal (VD) der Lichtintensität des Interferenzbildes entspricht,
   - die beiden Lichtstrahlen mittels eines in der Faserspule (FS) liegenden und von einem Modulationssignalgenerator (MG) angesteuerten Phasenmodulators (PM) moduliert werden, und bei dem
   - das verstärkte Photodetektorausgangssignal (VD') einem Synchrondemodulator (SYNCD) zugeführt wird,

   **dadurch gekennzeichnet**, daß
   - für das den Phasenmodulator (PM) beaufschlagende Modulationssignal (VC') ein Spannungssignal verwendet wird, welches aus der Summe von zwei Anteilen zusammengesetzt ist, von denen der erste Anteil einen Spannungsverlauf hat, der aus wechselweise aufeinanderfolgenden Beträgen besteht, welche im Phasenmodulator (PM) eine Phasenverschiebung von Null und $\pi/2$ hervorrufen, während der zweite Anteil aus weitgehend korrelationsfrei aufeinanderfolgenden Spannungsbeträgen besteht, welche im Phasenmodulator (PM) die Phasenverschiebungen von Null und $\pi$ hervorrufen,
   - der Sychnrondemodulator (SYNCD) mit dem Ausgangssignal eines Laufzeitausgleichselements (LZ) angesteuert wird, das eingangsseitig durch ein Signal aus dem Modulationssignalgenerator (MG) beaufschlagt wird, das aus vier Faktoren besteht, von denen
     -- der erste Faktor konstant den Wert -1 hat,
     -- der zweite Faktor -1 ist, wenn der zweite Anteil den Wert Null hat, jedoch +1 ist, wenn der zweite Anteil den Wert $\pi$ hat,
     -- der dritte Faktor -1 ist, wenn der zweite Anteil aus dem letzten vorhergehenden Modulatoinstakt den Wert Null hat, jedoch +1 ist, wenn der zweite Anteil aus dem letzten vorhergehenden Modulationstakt den Wert $\pi$ hatte, und
     -- der vierte Faktor dann -1 ist, wenn der erste Anteil den Wert Null hat, jedoch +1 ist, wenn der erste Anteil den Wert$\pi/2$ hat, und daß
   - das Produkt (d) der vier Faktoren um einen Laufzeitausgleich ($T_0$) korrigiert ist, der der Laufzeit ($t_0$) des Lichts jedes der Lichtstrahlen durch die Faserspule (FS) sowie der Prozeßzeit für die Summation zur Gewinnung des zweiten Signalanteils, zur Zusammensetzung des ersten und zweiten Signalanteils zum Ansteuersignal für den Phasenmodulator (PM) und einer Digital/Analog-Wandlung des Ansteuersignals (VC) entspricht.

## Claims

1. Modulation process for a fibre-optic Sagnac interferometer for measuring a rate of rotation, in which interferometer
   - two light beams which originate from a light source (L) and which are polarised by a polariser (P) and are generated by beam splitting (ST2) are injected in opposite directions into a fibre coil (FS) and are subsequently recombined,
   - the interference image produced, after passing through the polariser (P), acts upon a detector device (PD), the output signal (VD) of which corresponds to the light intensity of the interference image,

EP 0 498 902 B1

- the two light beams are modulated by means of a phase modulator (PM) situated in the fibre coil (FS) and driven by a modulation signal generator (MG), and in which
- the amplified photodetector output signal (VD') is fed to a synchronous demodulator (SYNCD),

characterised in that

- a voltage signal is used for the modulation signal (VC') acting upon the phase modulator (PM), which voltage signal is formed from the sum of two components, of which the first component has a voltage curve which consists of alternately successive amounts which cause a phase shift of zero and $\pi/2$ in the phase modulator (PM) whilst the second component consists of to a large extent correlation-free successive voltage amounts which cause the phase shifts of zero and $\pi$ in the phase modulator (PM),
- the synchronous demodulator (SYNCD) is driven by the output signal of a transit-time compensation element which has a signal from the modulation signal generator (MG) applied to it on the input side which consists of four factors, of which
  -- the first factor constantly has the value -1,
  -- the second factor is -1 if the second component has the value zero, but is +1 if the second component has the value $\pi$,
  -- the third factor is -1 if the second component of the last preceding modulation cycle has the value zero, but is +1 if the second component of the last preceding modulation cycle had the value $\pi$, and
  -- the fourth factor is -1 if the first component has the value zero, but is +1 if the first component has the value $\pi/2$, and in that
  the product (d) of the four factors is corrected by a transit time compensation ($T_0$), which corresponds to the transit time ($t_0$) of the light of each one of the light beams through the fibre coil (FS) as well as to the processing time for the summation to obtain the second signal component, to combine the first and second signal component to form the drive signal for the phase modulator (PM) and a digital/analogue conversion of the drive signal (VC).

**Revendications**

1. Procédé de modulation pour un interféromètre de Sagnac à fibre optique pour la mesure de la vitesse de rotation, par laquelle
   - deux faisceaux lumineux émis par une source de lumière (L), polarisés par un polariseur (P) et produits par division de faisceau (ST2), sont injectés dans un enroulement de fibre (FS), dans des directions opposées, puis réunis à nouveau,
   - l'image interférentielle formée est transmise, après le passage par le polariseur (P), à un dispositif de détection (PD) dont le signal de sortie (VD) correspond à l'intensité lumineuse de l'image interférentielle,
   - les deux faisceaux lumineux sont modulés au moyen d'un modulateur de phase (PM) situé dans l'enroulement de fibre (FS) et commandé par un générateur de signaux de modulation (MG), et par laquelle
   - le signal de sortie du photodétecteur (VD') amplifié est transmis à un démodulateur synchrone (SYNCD),

   caractérisée en ce que
   - le signal de modulation (VC') appliqué au modulateur de phase (PM) est un signal de tension qui est composé de la somme de deux composantes, la première composante présentant une courbe de tension composée de valeurs qui se succèdent alternativement et provoquent dans le modulateur de phase (PM) un déphasage de zéro et $\pi/2$, tandis que la seconde composante est composée de valeurs de tension successives dans une large mesure exemptes de corrélations lesquelles provoquent dans le modulateur de phase (PM) les déphasages de zéro et $\pi$,
   - le démodulateur synchrone (SYNCD) est commandé par le signal de sortie d'un élément compensateur de temps de propagation (LZ) auquel est appliqué du côté entrée un signal délivré par le générateur de signaux de modulation (MG) et se composant de quatre facteurs dont
     -- le premier facteur a une valeur constante de -1,
     -- le second facteur est de -1 si la seconde composante présente la valeur zéro; mais de +1 si la seconde composante présente la valeur $\pi$,
     -- le troisième facteur est de -1 si la seconde composante du dernier cycle de modulation précédent présente la valeur zéro, mais de +1 si le dernier cycle de modulation précédent avait la valeur $\pi$, et

7

-- le quatrième facteur est de -1 si la première composante présente la valeur zéro, mais de + 1 si la première composante présente la valeur $\pi/2$, et que

- le produit (d) des quatre facteurs est corrigé d'une compensation de temps de propagation ($T_0$) qui correspond au temps de propagation ($t_0$) de la lumière de chacun des faisceaux lumineux par l'enroulement de fibre (FS) ainsi qu'au temps du processus de sommation pour l'acquisition de la seconde composante du signal, pour l'assemblage des première et seconde composantes du signal en un signal de commande pour le modulateur de phase (PM) et pour une conversion numérique/analogique du signal de commande (VC).

# Fig.1

# Fig. 2a

Sinusmodulation

$\Omega = 0$ $\qquad\qquad\qquad$ $\Omega > 0$

# Fig. 2b

Rechteckmodulation

# Fig.3

(Stand der Technik)

EP 0 498 902 B1

# Fig.4

MG

Modulationssignalgen.

b0 — π

b1 — π/2

D/A - Wandler

DAC

VC

K

Kreisel

Demodulator

e

DEM

y

d'

Laufzeitausgleich

d

T₀

# Fig.5

# Fig.6